(19) Europäisches Patentamt
European Patent Office
Office européen des brevets

(11) EP 0 608 158 B1

(12) **FASCICULE DE BREVET EUROPEEN**

(45) Date de publication et mention de la délivrance du brevet:
**03.09.1997 Bulletin 1997/36**

(51) Int. Cl.$^6$: **B01J 8/02**, B01J 19/18

(21) Numéro de dépôt: **94400040.5**

(22) Date de dépôt: **06.01.1994**

(54) **Procédé de préparation du dicyclopentenyloxyethanol**
Verfahren zur Herstellung von Dicyclopentenyloxyethanol
Process for producing dicyclopentenyloxyethanol

(84) Etats contractants désignés:
**AT BE CH DE DK ES FR GB GR IE IT LI LU NL PT SE**

(30) Priorité: **18.01.1993 FR 9300395**

(43) Date de publication de la demande:
**27.07.1994 Bulletin 1994/30**

(73) Titulaire: **ELF ATOCHEM S.A.**
**92800 Puteaux (FR)**

(72) Inventeurs:
- **Riondel, Alain Mr.**
  **F-57 600 Forbach (FR)**
- **Becker, Clément, Mr.**
  **F-57 540 Petite-Rosselle (FR)**

(74) Mandataire: **Eidelsberg, Victor Albert et al**
**Cabinet Flechner**
**22, Avenue de Friedland**
**75008 Paris (FR)**

(56) Documents cités:
**WO-A-90/11114**
**FR-A- 2 293 238**
**FR-A- 2 399 994**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 608 158 B1

## Description

L'invention concerne la préparation du dicyclopenténylоxyéthanol.

Au FR-A-2.399.994, on décrit un procédé de préparation d'un produit d'addition de type monoétheroxyde par réaction d'un polyol sur le dicyclopentadiène. Le catalyseur acide utilisé est une résine échangeuse de cations réticulée portant des fonctions acides. Le procédé s'effectue en discontinu et nécessite une séparation préalable du catalyseur par filtration, avant distillation du produit brut réactionnel.

L'invention pallie cet inconvénient par un procédé qui permet de se dispenser entièrement de ce stade de filtration du catalyseur et qui, de plus, permet d'obtenir des conversion, rendement et sélectivité sensiblement meilleurs.

Le procédé de préparation du dicyclopenténylоxyéthanol de formule

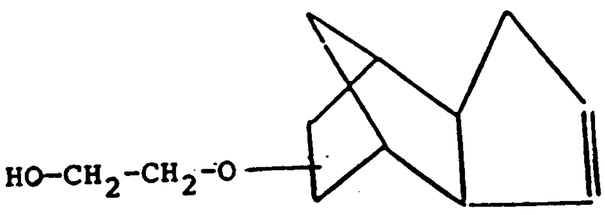

par réaction du dicyclopentadiène sur l'éthylèneglycol en présence, comme catalyseur, d'une résine acide échangeuse d'ion cationique, consiste à brasser le cyclopentadiène et l'éthylèneglycol dans une cuve de brassage pour obtenir un mélange et à mettre le mélange en contact avec le catalyseur dans une cartouche distincte de la cuve de brassage.

L'installation dans laquelle s'effectue le procédé comprend une cuve de brassage et une cartouche de catalyseur disposée en dehors de la cuve et communiquant avec celle-ci en circuit fermé, et des moyens de mise en circulation dans le circuit des réactifs liquides que sont le dicyclopentadiène et l'éthylèneglycol et du dicyclopentènyloxéthanol liquide produit.

Les réactifs passent sur le catalyseur solide sans l'entraîner et retournent avec le produit à la cuve de brassage en empruntant plusieurs fois ce circuit fermé, jusqu'à ce que l'on mette fin à la réaction et que l'on évacue le produit obtenu de l'installation. Cette évacuation peut s'effectuer sans que le catalyseur retenu dans la cartouche soit entraîné, si bien que l'on n'a pas à en débarrasser le produit obtenu.

Les moyens de mise en circulation sont prévus, avantageusement, en aval de la cuve et en amont de la cartouche, dans le sens de circulation dans l'installation.

Pour alimenter l'installation, il est prévu une source de réactif qui communique avec le circuit, par un conduit de chargement muni d'une vanne d'arrêt et débouchant dans le circuit en un point en aval de la cuve et en amont de la cartouche. Pour soutirer le produit liquide de l'installation, il est prévu une vanne à trois voies montée entre le point où le conduit de chargement débouche dans le circuit et la cartouche. Lorsque l'installation fonctionne, la vanne à trois voies ferme le circuit. Pour le prélèvement, elle l'interrompt et ménage une sortie à l'extérieur. De préférence, la vanne à trois voies est montée en amont des moyens de mise en circulation qui sont notamment une pompe, par exemple une pompe à membrane ou une pompe à engrenage.

On prévoit également, de préférence, une vanne d'arrêt sur le circuit, entre la cuve et le point où le conduit de chargement débouche dans le circuit.

Une source de gaz protecteur peut communiquer avec la cuve et celle-ci peut être munie d'une spire de refroidissement. Les deux branches du circuit communiquant avec la cuve y débouchent, de préférence, toutes deux dans la partie basse. Le catalyseur solide acide peut être un acide de Bronstedt ou un acide de Lewis ou, de préférence, une résine acide échangeuse d'ion cationique. Les fonctions acides de la résine peuvent consister en des groupes acide sulfonique, acide phosphonique, acide phosphinique ou acide carboxylique, conférant à la résine une valeur de $pK_a$ de 6 ou inférieure (cf. Friedrich Helfferich, "Ion Exchange" Mc Graw-Hill New York, NY, 1962, pages 79 à 88). Les résines acides sulfoniques ont de préférence une valeur de $pK_a$ inférieure à 1 environ. D'une manière générale, les résines utilisables dans l'invention peuvent avoir un squelette polymère du type gel ou du type macroréticulaire, portant les fonctions acides qu'on vient de mentionner. Parmi les résines échangeuses de cation portant les fonctions acides qui conviennent, on citera les résines macroréticulaires réticulées à noyau aromatique portant des groupes acides sulfonique et carboxylique, par exemple celles décrites au brevet des Etats-Unis d'Amérique US-A-3.838.043 ; et les résines macroréticulaires et à l'état de gel portant les groupes acide phosphonique et acide phosphinique dont la préparation est décrite dans l'ouvrage de Friedrich Helfferich, "Ions Exchange" Mc Graw-Hill (op.cit.), (pages 32 et 38 et 39). Dans le cas de résines acides carboxyliques de faible acidité, l'acidité peut être augmentée par la présence d'un groupe électronégatif, tel qu'un groupe cyano ou trifluorométhyle sur l'atome de carbone, en la position $\alpha$ du groupe acide carboxy-

lique. De préférence, les résines utilisées dans l'invention sont des résines échangeuses de cation réticulées à forte acidité, à savoir des résines macroréticulaires ou en gel réticulé à noyau aromatique portant des groupes acide sulfonique consistant en un polymère sulfoné, ce dernier ayant été formé à partir d'un mélange de monomères contenant de 1 à 100 % de son poids total d'un monomère aromatique polyvinylique. Ces résines se caractérisent par une capacité d'échange d'ion allant d'environ 0,5 à 5,0 meq/g. Des monomères aromatiques polyvinyliques qui conviennent sont entre autres le divinylbenzène, le trivinylbenzène, le divinyltoluène, le divylnaphtalène, la divinylpyridine et le phtalate de diallyle. Le mélange des monomères peut en outre contenir jusqu'à 99 % environ du poids total d'un monomère aromatique monovinylique. Des monomères aromatiques monovinyliques qui conviennent sont, entre autres, le styrène et ses dérivés alcoylés et halogénés, le vinylanisole et le vinylnaphtalène. Mais on peut également utiliser comme monomères réticulants, le diacrylate et le diméthacrylate de l'éthylèneglycol, le diméthacrylate et le triméthacrylate du triméthylolpropane, l'acrylate et le méthacrylate d'allyle et le maléate de diallyle. De préférence, la résine est une résine macroréticulaire consistant en un copolymère macroréticulaire sulfoné, le copolymère ayant été obtenu par polymérisation d'un mélange de monomères consistant en environ 10 à 85 % de son poids total d'un monomère aromatique polyvinylique (de preférence le divinylbenzène) et de 15 à 90 % de son poids total d'un monomère aromatique monovinylique (de préférence le styrène) ou une résine du type gel constituée d'un copolymère en gel sulfoné, le copolymère ayant été obtenu par polymérisation d'un mélange de monomères comprenant environ 1 à 20 %, de préférence de 1 à 10 % de son poids total d'un monomère aromatique polyvinylique (de préférence le divinylbenzène), et d'environ 80 à 99 %, de préférence de 90 à 99 % de son poids total d'un monomère aromatique monovinylique (de préférence le styrène).

On préfère tout particulièrement une résine échangeuse d'ion fortement acide, peu réticulée, macroporeuse portant des groupes acide sulfonique ayant une capacité totale de 1 équivalent/litre, une fraction granulométrique comprise entre 0,315 et 1,25 mm représentant au moins 90% de son poids et une masse volumique comprise entre 700 et 800g/litre.

La proportion de résine acide exprimée en équivalent de groupe fonctionnel acide de la résine par mole de dicyclopentadiène ou en "équivalent %" qui est le nombre d'équivalents de groupes fonctionnels acides de la résine par mole de dicyclopentadiène x 100 %, peut varier de 0,01:1 à 0,5:1. Les proportions relatives entre le l'éthylèneglycol et le dicyclopentadiène peuvent varier de 1:4 à 2:1.

Au dessin annexé, donné uniquement à titre d'exemple :

la figure 1 est un schéma d'une installation suivant l'invention, et
les figures 2 et 3 sont des graphiques comparatifs des conversion, rendement et sélectivité d'un procédé classique et d'un procédé suivant l'invention.

L'installation représentée à la figure 1 comporte une cuve 1 munie d'un agitateur 2 et d'une double enveloppe 3 pour la régulation de la température, ainsi que d'un condenseur 4 et 5. Du bas de la cuve 1 est issu un conduit 6 muni d'une vanne d'arrêt 7 qui se continue par un conduit 8 muni d'une vanne à trois voies 9. En aval de la vanne 9 est prévue une pompe 10 qui débouche, par l'intermédiaire d'une vanne d'arrêt 11, dans une cartouche 12 en acier inoxydable remplie de billes de résine du type utilisé dans l'invention. La cartouche est munie de 2 supports constitués de treillis métalliques qui permettent de retenir les billes de résine. Le circuit se prolonge par un conduit 13 qui débouche au bas de la cuve 1.

Un réservoir 14 de DCPD (dicyclopentadiène) débouche, par l'intermédiaire d'un conduit 18 muni d'une vanne d'arrêt 16 dans un conduit 20. On introduit directement l'éthylèneglycol dans la cuve 1. Ce conduit mène à l'aspiration d'une pompe doseuse 21 dont le conduit de refoulement 22 débouche, par l'intermédiaire d'une vanne d'arrêt 23, en un point 24 du circuit, en aval de la cuve 1 et en amont de la cartouche 2 et, de fait, en amont de la vanne 9 et de la pompe 10. Un dispositif 15 permet de mesurer le débit de DCPD introduit.

L'installation fonctionne de la manière suivante. Alors que la vanne 23 est ouverte et que la vanne 9 autorise le passage vers la cartouche 12 et que la vanne 7 permet la circulation des réactifs entre la cuve 1 et la cartouche 12 en circuit fermé, on envoie du DCPD du réservoirs 14 par la pompe 21, la vanne 23, la vanne 9 et la pompe 10, dans la cartouche 12, puis par le conduit 13 dans la cuve 1. On ferme ensuite la vanne 23 après addition totale du DCPD ce qui permet d'établir un circuit fermé de circulation des réactifs et du produit entre la cartouche 12 et la cuve 1 de brassage. La réaction achevée, on prélève le produit de la réaction par la vanne à trois voies 9 qui permet de sortir le produit de l'installation.

Les exemples suivants illustrent l'invention.

Exemple comparatif

On prépare du DCPOE (dicyclopentènyloxyéthanol) en discontinu, comme décrit au FR-A-2.399.994, en faisant réagir 3 moles (396 g) de DCPD sur 5,1 moles (316,2 g) d'éthylèneglycol en la présence de 6 % en poids d'une résine portant des groupes acide sulfonique et présentant une capacité totale de 1 équivalent/litre (minimum) selon la norme

DIN, une fraction granulométrique comprise entre 0,315 et 1,25 mm (minimum 90%) et une masse volumique comprise entre 700 à 800 g/litre, par rapport au DCPD, soit 23,8 g. Le réacteur est chargé en éthylèneglycol et du catalyseur. Le mélange sous azote (débit 1 litre normal/heure) est porté à 95°C. L'addition du DCPD est réalisée en 5 heures à l'aide d'une pompe doseuse. L'exothermicité de la réaction permet d'atteindre la température de consigne de 105°C. On maintient le mélange réactionnel sous agitation pendant 5 heures, après toute l'addition du DCPD puis on vidange entre 50 et 60°C et ensuite on le débarrasse du catalyseur par filtration.

A la figure 2, on a porté sur les courbes I,II et III respectivement, en fonction du nombre d'essais,
la conversion du DCPD, soit C (%) = 100 -[ poids du(DCPD résiduel/poids du DCPD initial] le rendement, R (%) = (poids du DCPOE) formé/poids du DCPD initial x 100 , et
la sélectivité en DCPOE : S (%) = R/C x 100 , en fonction du nombre d'essais

La conversion, le rendement et la sélectivité sont déterminés par analyse par chromatographie en phase gazeuse du produit réactionnel brut filtré.

Exemple suivant l'invention

On charge 6,46 moles (853 g) de DCPD dans la cuve 14, on introduit dans la cartouche 5,86 % en poids/DCPD de résine, c'est-à-dire 50 g de résine utilisée dans l'exemple précédent, soit 5,86% en poids par rapport au DCPD. L'éthylèneglycol (11 moles soit 682 g) est introduit dans la cuve 1. La cartouche a un volume de 230 ml et une hauteur de 0,18 m. Le débit de recirculation est de 20 litres/heures, le temps de séjour dans la cartouche est de 24 secondes avec une vitesse linéaire de 0,45 mètres/minute.

Les autres conditions opératoires (chauffage, durée d'additions du DCPD, durée de chauffage après addition du DCPD) sont identique à celles mises en oeuvre dans l'exemple comparatif. Cet exemple selon l'invention est réalisée sans phase de filtration.

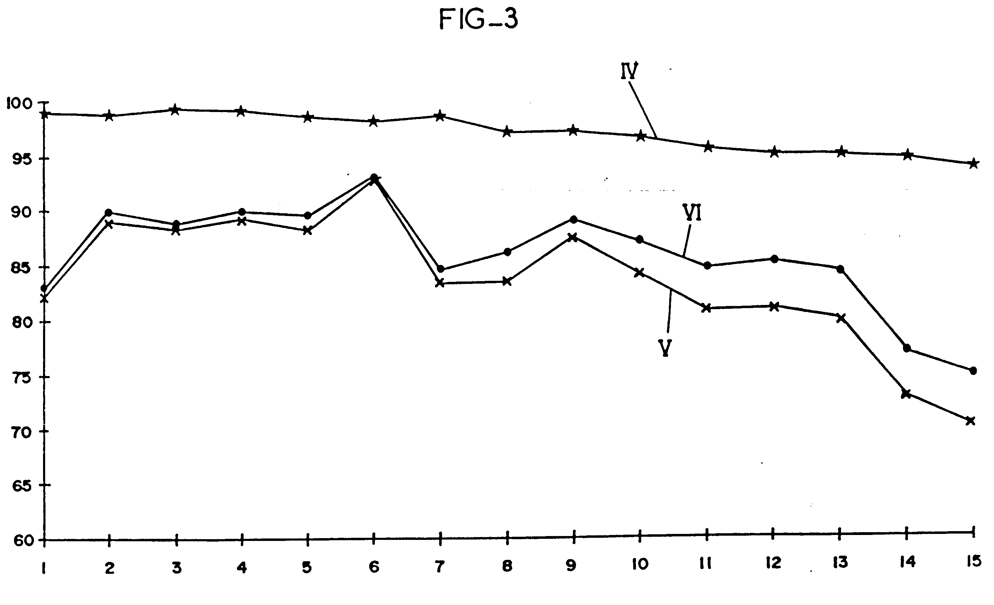

La figure 3 illustre les résultats obtenus, les courbes IV, V et VI donnant la conversion, le rendement et la sélectivité en DCPOE.

Ces figures montrent que la conversion du DCPD et les rendement et sélectivité en DCPOE sont meilleurs dans le procédé suivant l'invention que dans le procédé classique, comme le résume le tableau ci-dessous et bien que le procédé suivant l'invention permette de se dispenser de l'opération de filtration.

Tableau

| | DCPD | DCPOE | |
|---|---|---|---|
| | C (%) | R (%) | S (%) |
| En discontinu | 92,7 | 69 | 74,5 |
| Suivant l'invention | 94,6 | 72,8 | 76,9 |

Ce tableau résume les résultats obtenus au 15ème essai.

## Revendications

1. Procédé de préparation du dicyclopenténylоxyéthanol de formule

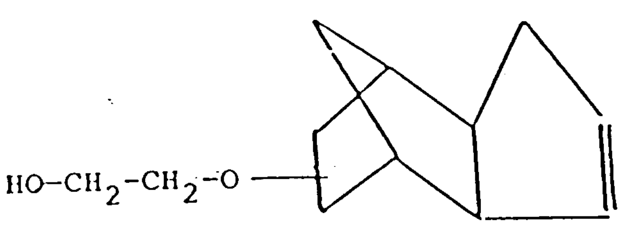

par réaction du dicyclopentadiène sur l'éthylèneglycol en présence, comme catalyseur, d'une résine acide échangeuse d'ion cationique, caractérisé en ce qu'il consiste à brasser le dicyclopentadiène et l'éthylèneglycol dans une cuve de brassage pour obtenir un mélange et à mettre le mélange en contact avec le catalyseur dans une cartouche distincte de la cuve de brassage.

2. Procédé suivant la revendication 1, caractérisé en ce que le catalyseur est une résine macroporeuse peu réticulée portant des groupes acide sulfonique, ayant une capacité totale de 1 équivalent/litre (minimum), une fraction granulométrique comprise entre 0,315 et 1,25 mm représentant au moins 90% de son poids et une masse volumique comprise entre 700 et 800 g/litre.

3. Procédé suivant la revendication 1, caractérisé en ce qu'il consiste à effectuer la réaction dans une installation, qui comprend une cuve de brassage des réactifs liquides que sont le dicyclopentadiène et l'éthylèneglycol, une cartouche de catalyseur disposée en dehors de la cuve et communiquant avec celle-ci en circuit fermé et des moyens de mise en circulation des réactifs liquides et du dicyclopentènyloxyéthanol liquide produit dans le circuit prévus en aval de la cuve et en amont de la cartouche, une source de réactifs communiquant avec le circuit par un conduit de chargement muni d'une vanne d'arrêt et débouchant dans le circuit en un point en aval de la cuve et en amont de la cartouche, une vanne d'arrêt étant montée sur le circuit entre la cuve et le point où le conduit de chargement débouche dans le circuit.

4. Procédé suivant la revendication 3, caractérisé par une vanne à trois voies montée entre le point où le conduit de chargement débouche dans le circuit et la cartouche.

5. Procédé suivant la revendication 4, caractérisé en ce que la vanne à trois voies est montée en amont des moyens de mise en circulation.

6. Procédé suivant la revendication 5, caractérisé en ce qu'une source de gaz protecteur communique avec la cuve.

7. Procédé suivant la revendication 4, caractérisé en ce que la cuve est munie d'une chemise de refroidissement.

8. Procédé suivant la revendication 4, caractérisé en ce que les deux branches du circuit communiquant avec la cuve y débouchent toutes deux dans la partie basse.

**Claims**

1. Process for the preparation of dicyclopentenyloxyethanol, having the formula

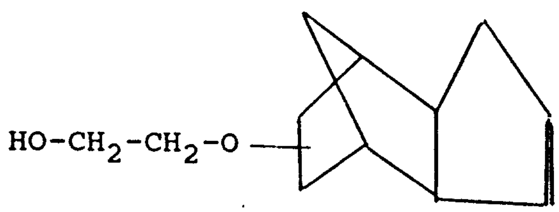

by reaction between dicyclopentadiene and ethylene glycol in the presence of a catalyst consisting of an acid cation exchange resin, comprising mixing the dicyclopentadiene with the ethyleneglycol in a mixing tank to obtain a mixture and then bringing the mixture into contact with the catalyst in a cartridge separate from the mixing tank.

2. The process of claim 1, wherein the catalyst is a macroporous resin having acid sulfonyl groups, with a particle size fraction between 0.315 and 1.25 mm representing at least 90% of its weight and a density between 700 and 800 g/litre.

3. The process of claim 1, which comprises carrying out the reaction in an installation comprising the tank for mixing the reactants, namely dicyclopentadiene and ethyleneglycol, the cartridge of catalyst positioned outside the tank and communicating with it in closed circuit, and means of circulating the liquid reactants and the liquid dicyclopentenyloxyethanol produced around the circuit, the said means being located downstream from the tank and upstream from the cartridge, a source of reactants communicating with the circuit via a feed pipe fitted with a stopcock and leading into the circuit at a point downstream from the tank and upstream from the cartridge, a stopcock being fitted in the circuit between the tank and a point where the feed pipe leads into the circuit.

4. The process of claim 3, wherein a three-way valve is fitted between the point where the feed pipe leads into the circuit and the cartridge.

5. The process of claim 4, wherein the three-way valve is fitted upstream from the means of circulation.

6. The process of claim 5, wherein a source of protective gas communicates with the tank.

7. The process of claim 4, wherein the tank is fitted with a cooling jacket.

8. The process of claim 4, wherein two branches of the circuit communicating with the tank both connect with it at the bottom.

**Patentansprüche**

1. Verfahren zur Herstellung von Dicyclopentenyloxyethanol der folgenden Formel

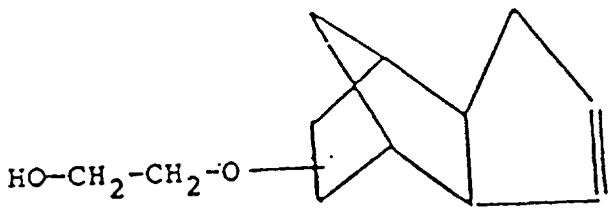

durch Umsetzung von Dicyclopentadien mit Ethylenglykol in Gegenwart eines sauren Kationenaustauscherharzes als Katalysator,
**dadurch gekennzeichnet, daß**
es aus den folgenden Schritten besteht: Rühren des Dicyclopentadiens und Ethylenglykols in einem Rührbehälter, um ein Gemisch herzustellen, und Inkontaktbringen des Gemisches mit dem Katalysator in einer von dem Rührbehälter getrennten Kartusche.

2. Verfahren nach Anspruch 1, dadurch gekennzeichnet, daß der Katalysator ein makroporöses, wenig vernetztes Harz mit Sulfonsäuregruppen ist, das eine Gesamtkapazität von 1 Äquivalent/l (Minimum), eine Korngrößenklasse im Bereich von 0,315 und 1,25 mm, die wenigstens 90 % seines Gewichtes ausmacht, und eine Dichte im Bereich von 700 und 800 g/l aufweist.

3. Verfahren nach Anspruch 1, dadurch gekennzeichnet, daß es darin besteht, die Reaktion in einer Anlage durchzuführen, die folgendes umfaßt: einen Mischbehälter für die flüssigen Reaktanten Dicyclopentadien und Ethlenglykol, eine Katalysatorkartusche, die außerhalb des Behälters angeordnet ist und mit diesem über einen geschlossenen Kreislauf in Verbindung steht, und Mittel, um die flüssigen Reaktanten und das in dem Kreislauf erzeugte flüssige Dicyclopentenyloxyethanol in Zirkulation zu versetzen, die dem Behälter nachgeschaltet und der Kartusche vorgeschaltet vorgesehen sind, eine Reaktantenquelle, die mit dem Kreislauf über eine Beschickungsleitung verbunden ist, die mit einem Absperrventil versehen ist und an einem dem Behälter nachgeschalteten und der Kartusche vorgeschalteten Punkt in den Kreislauf einmündet, ein Absperrventil, das in dem Kreislauf zwischen dem Behälter und dem Punkt angebracht ist, an dem die Beschickungsleitung in den Kreislauf einmündet.

4. Verfahren nach Anspruch 3, gekennzeichnet durch einen Dreiwegehahn, der zwischen dem Punkt, an dem die Beschickungsleitung in den Kreislauf einmündet, und der Kartusche angebracht ist.

5. Verfahren nach Anspruch 4, dadurch gekennzeichnet, daß der Dreiwegehahn den Mitteln zur Bewirkung der Zirkulation vorgeschaltet angebracht ist.

6. Verfahren nach Anspruch 5, dadurch gekennzeichnet, daß eine Schutzgasquelle mit dem Behälter verbunden ist.

7. Verfahren nach Anspruch 4, dadurch gekennzeichnet, daß der Behälter mit einem Kühlmantel ausgestattet ist.

8. Verfahren nach Anspruch 4, dadurch gekennzeichnet, daß die zwei Zweige des Kreislaufes mit dem Behälter in Verbindung stehen und beide im unteren Teil einmünden.

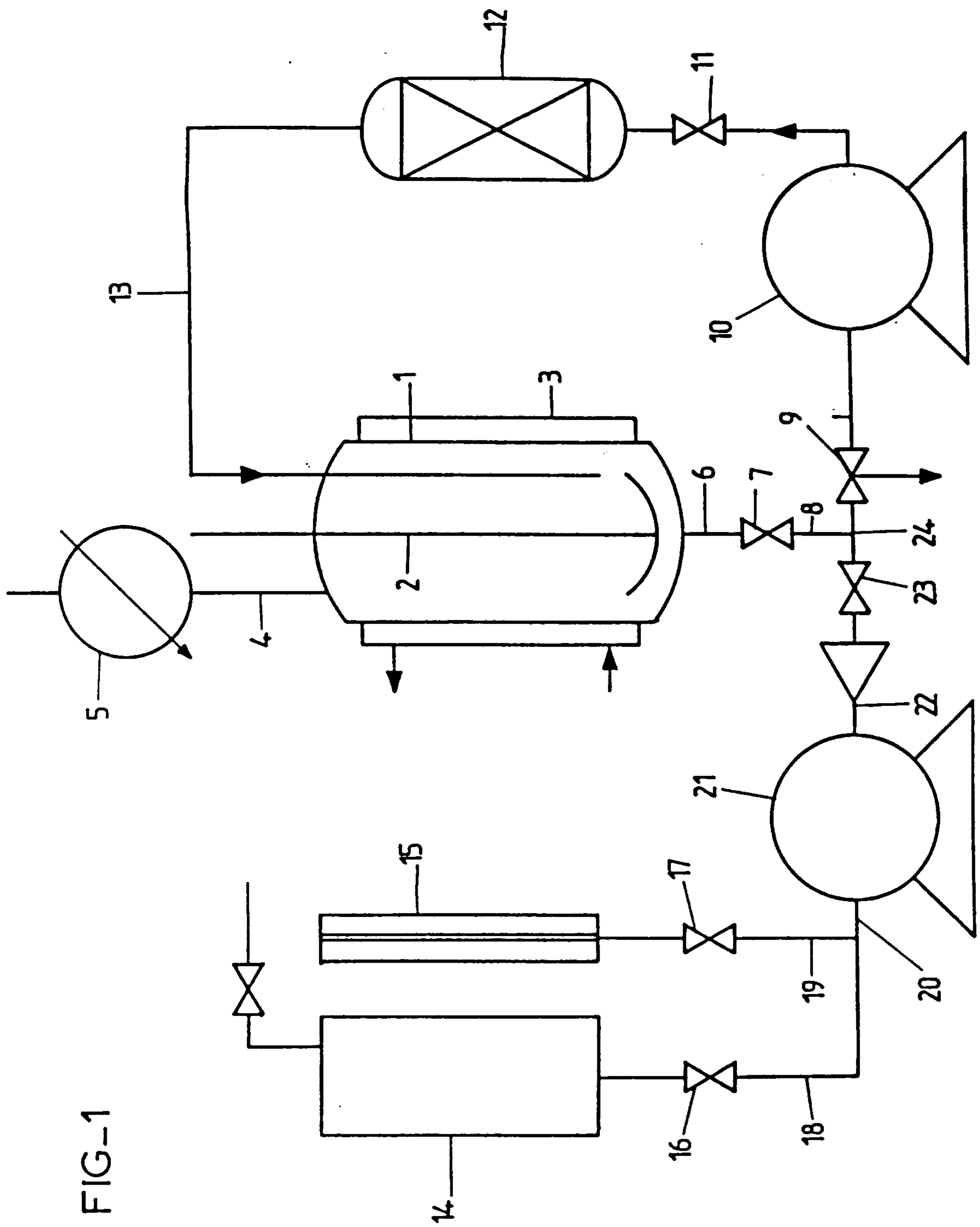


FIG_1

FIG_2

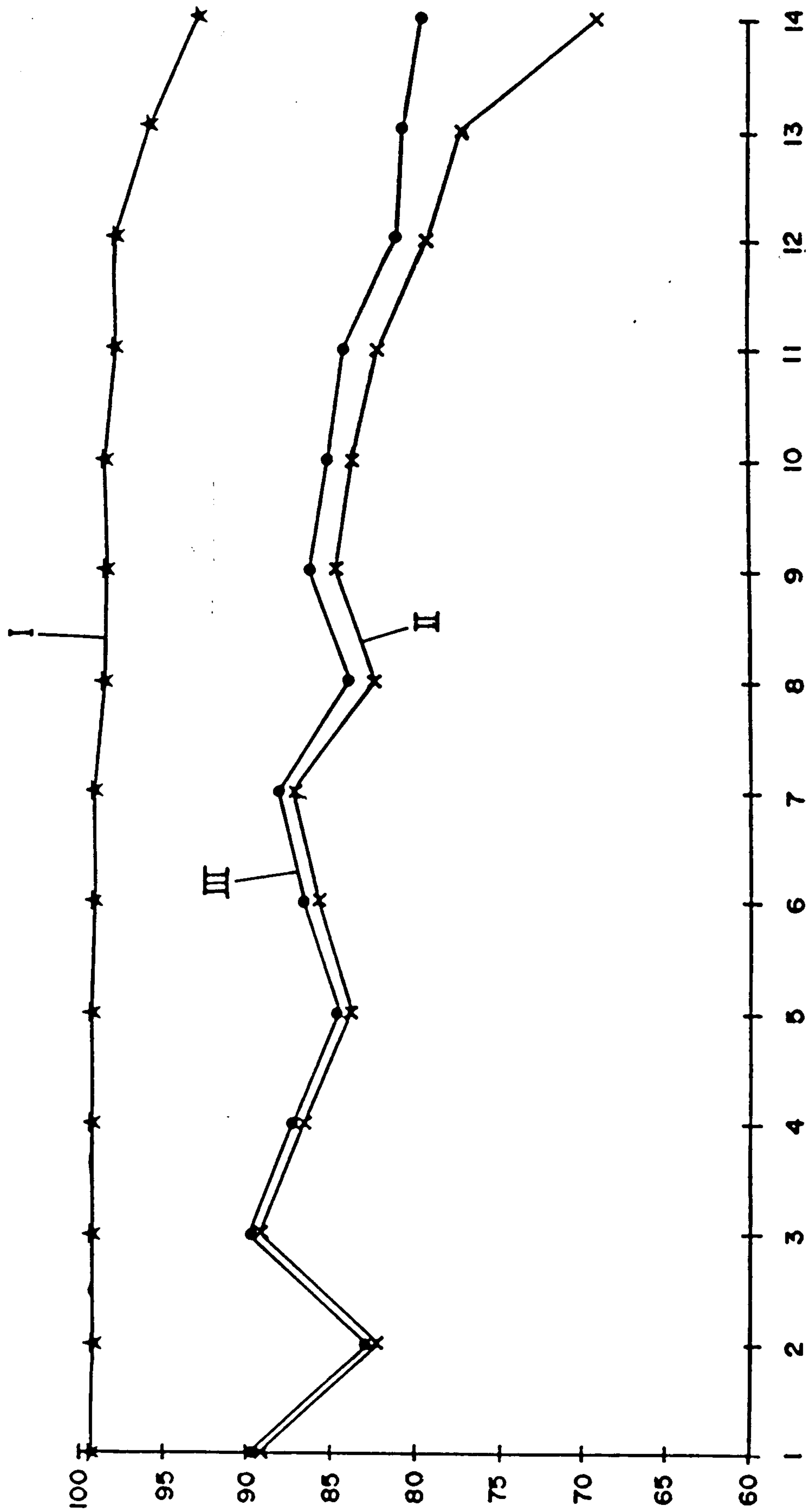

FIG_3